Europäisches Patentamt

European Patent Office

Office européen des brevets

(11) Numéro de publication : **0 019 534**
**B1**

(12) **FASCICULE DE BREVET EUROPÉEN**

(45) Date de publication du fascicule du brevet :
05.01.83

(51) Int. Cl.³ : **F 16 H 5/28**

(21) Numéro de dépôt : 80400642.7

(22) Date de dépôt : 09.05.80

(54) **Dispositif de commande à fluide sous pression, notamment hydraulique, des changements de rapports d'une boîte de vitesses à rapports étagés.**

(30) Priorité : 11.05.79 FR 7912127

(43) Date de publication de la demande :
26.11.80 Bulletin 80/24

(45) Mention de la délivrance du brevet :
05.01.83 Bulletin 83/01

(84) Etats contractants désignés :
DE GB IT

(56) Documents cités :
BE A 567 748
DE A 1 480 497
DE C 506 223
DE C 651 214
FR A 1 161 188
FR A 1 296 801
FR A 1 344 527
FR A 2 052 549
GB A 656 665
US A 3 296 879
US A 4 137 824

(73) Titulaire : **SOCIETE ANONYME AUTOMOBILES CITROEN**
**117 à 167, Quai André Citroen**
**F-75747 Paris Cedex 15 (FR)**

**AUTOMOBILES PEUGEOT**
**75, avenue de la Grande Armée**
**F-75116 Paris (FR)**

(72) Inventeur : **Prestrelle, Pierre-René**
**21, rue Offenbach**
**F-93250 Villemomble (FR)**
Inventeur : **Poussier, André Roland**
**Sente du Haras**
**F-78530 BUC (FR)**

(74) Mandataire : **Michardière, Bernard et al**
**Cabinet Plasseraud 84, rue d'Amsterdam**
**F-75009 Paris (FR)**

Jouve, 18, rue St-Denis, 75001 Paris, France

Dispositif de commande à fluide sous pression, notamment hydraulique, des changements de rapports d'une boîte de vitesses à rapports étagés

L'invention est relative à un dispositif de commande à fluide sous pression, notamment hydraulique, des changements de rapport d'une boîte de vitesses à rapports étagés, à l'aide de vérins à fluide, chaque vérin étant propre à déplacer un coulisseau d'actionnement de fourchette de changement de vitesses, les vérins étant successivement alimentés en fluide par des moyens de distribution commandés par un opérateur, notamment le conducteur d'un véhicule automobile, un système d'accouplement débrayable étant disposé entre l'entrée de la boîte de vitesses et un moteur d'entraînement, les moyens de distribution comprenant un distributeur rotatif comportant un orifice d'entrée, des moyens de mise à l'échappement des orifices de branchement reliés à chaque vérin, ce distributeur étant agencé pour mettre en liaison, dans ses différentes positions angulaires successives, un seul orifice de branchement, et donc un seul vérin avec l'orifice d'entrée, tandis que tous les autres orifices de branchement et vérins sont mis en liaison avec l'échappement, ce dispositif de commande comportant un commutateur rotatif lié en rotation au distributeur.

Le document FR-A-1 296 801 montre un dispositif de commande électrique de ce genre. Cependant, la réalisation de ce dispositif est relativement compliquée et fait intervenir un circuit électrique comprenant des génératrices tachymé-triques et un circuit d'équilibrage dans lequel intervient le commutateur rotatif. Ce dispositif de commande est destiné à assurer le déclenchement d'un changement de vitesse à un instant antérieur, d'un laps de temps exactement prévu, à l'instant où intervient le synchronisme précis entre les pignons qu'il s'agit de mettre en prise.

Il convient, en outre, de remarquer que ce dispositif de commande antérieur est essentiellement prévu pour une commande pneumatique, ce qui simplifie sensiblement la réalisation des moyens de mise à l'échappement et du distributeur rotatif puisqu'il suffit que les canalisations de liaison avec les vérins d'actionnement soient ouvertes à l'atmosphère sans passage à travers le distributeur. Une telle solution ne pourrait convenir à une commande hydraulique.

L'invention a pour but, surtout, de fournir un dispositif de commande du genre défini précédemment, notamment pour une commande hydraulique, qui soit d'une réalisation rendue relativement simple par mise à profit de la présence d'un distributeur rotatif et d'un commutateur rotatif.

L'invention concerne plus particulièrement, mais non exclusivement, un dispositif de commande des changements de rapports d'une boîte de vitesses associée avec un système d'accouplement débrayable comportant un dispositif hydrodynamique à glissement de fluide (coupleur ou convertisseur), lui-même associé à un embrayage mécanique propre à être débrayé lors de chaque changement de rapport de la boîte de vitesses.

Selon l'invention, un dispositif de commande à fluide sous pression, notamment hydraulique, du genre défini précédemment est caractérisé par le fait que le distributeur rotatif comporte au moins un orifice de sortie et est agencé pour mettre en liaison, avec cet orifice de sortie, tous les vérins autres que celui relié à l'orifice d'entrée, que les moyens de distribution comprennent une électrovanne montée sur une canalisation branchée sur l'orifice d'entrée du distributeur, cette électrovanne étant propre à relier, selon son état, ledit orifice d'entrée ou à une arrivée de fluide sous pression, ou à un échappement, et que le commutateur rotatif est combiné avec des contacts électriques pour commander l'électrovanne de manière à assurer l'alimentation en fluide sous pression de l'orifice d'entrée au moins lorsque le rapport est engagé, tandis que ledit orifice d'entrée est branché à l'échappement tant que le débrayage et/ou le dégagement de tous les rapports ne sont pas effectifs.

Avantageusement, le distributeur rotatif comporte un tiroir central monté rotatif dans un manchon, ce tiroir comportant un canal longitudinal alimenté en fluide sous pression, notamment à partir d'une gorge périphérique, et au moins deux canaux orientés radialement et décalés axialement et angulairement, ces canaux étant propres à mettre en liaison le canal longitudinal avec la surface du tiroir, chaque canal radial étant propre à venir, pour une position angulaire déterminée du tiroir en face d'un orifice prévu dans le manchon et relié à un orifice de branchement et donc à un des vérins, la zone entourant le tiroir étant reliée à l'échappement.

De préférence, le tiroir central comporte trois canaux orientés radialement, débouchant dans des pavés situés à la surface du tiroir, ces canaux étant décalés angulairement de 120° pour assurer l'équilibrage des forces de pression, un des canaux servant seulement à l'équilibrage, tandis que les deux autres canaux servent à alimenter successivement les vérins de commande de rapports différents.

Le tiroir central peut comporter un prolongement axial sur lequel est calée en rotation une partie centrale tournante du commutateur rotatif, ce dernier comportant une partie annulaire périphérique entourant la partie centrale et montée fixe sur un boîtier.

La partie centrale tournante du commutateur comporte, sur son pourtour, une bague conductrice munie d'un ergot faisant saillie radialement, tandis que la partie annulaire périphérique comporte un premier doigt, orienté radialement, et ayant une longueur suffisante pour rester en liaison électrique permanente avec ladite bague, et une pluralité d'autres doigts, orientés radialement et espacés angulairement, dont la longueur est inférieure à celle du premier doigt de telle sorte qu'un de ces autres doigts ne peut être en liaison électrique avec la bague que lorsque le susdit ergot est orienté dans la direction du susdit doigt ; le premier doigt, de plus grande longueur, est notamment relié à la borne positive d'une source de tension tandis que un sur deux des autres doigts (tout au moins pour une partie de ces autres doigts) est branché de manière à commander le passage de l'électrovanne dans l'état qui assure le branchement de l'orifice d'entrée du distributeur à l'échappement.

Le prolongement du tiroir est avantageusement solidaire en rotation d'un barillet-poulie, notamment disposé entre le tiroir proprement dit et le commutateur et des moyens d'entraînement du barillet-poulie sont prévus, ces moyens comprenant, notamment, un câble s'enroulant autour du barillet, un brin du susdit câble étant relié à une extrémité d'un levier de sélection de vitesses commandant les mouvements de ce câble.

L'électrovanne est agencée de manière à assurer l'alimentation en fluide sous pression de l'orifice d'entrée du distributeur lorsqu'elle n'est pas soumise à une tension électrique et à assurer le branchement dudit orifice d'entrée sur l'échappement lorsqu'elle est soumise à la tension électrique.

Le circuit d'alimentation électrique de l'électrovanne est commandé par un contact d'un relais dont l'enroulement est monté dans un circuit propre à être fermé par le contact établi entre l'ergot du commutateur rotatif et au moins un des doigts de plus faible longueur reliés audit enroulement, ce circuit comprenant, en série avec l'enroulement de commande du relais, deux contacts branchés en parallèle, notamment entre une extrémité dudit enroulement et la masse, l'un de ces contacts étant propre à être coupé lorsqu'un coulisseau de la boîte de vitesses occupe la position de point mort effectif, tandis que l'autre contact est propre à être coupé lorsque le système d'accouplement débrayable est effectivement débrayé.

Lorsque le système d'accouplement débrayable est commandé par une pression de fluide, le contact associé au système d'accouplement est constitué par un manocontact.

Le relais de commande de l'électrovanne comporte avantageusement un contact travail branché de manière à assurer une auto-alimentation électrique de l'enroulement de commande de ce relais, notamment pour maintenir fermé le susdit relais lorsque le contact entre le susdit ergot et un des doigts du commutateur, reliés audit enroulement, est interrompu lors de la rotation de la partie centrale de ce commutateur pour un changement de vitesses.

L'invention consiste, mises à part les dispositions exposées ci-dessus, en certaines autres dispositions dont il sera plus explicitement question ci-après à propos d'un mode de réalisation particulier décrit avec référence aux dessins ci-annexés, mais qui n'est nullement limitatif.

La figure 1 de ces dessins, est un schéma d'ensemble d'un dispositif de commande selon l'invention.

La figure 2 est une coupe suivant II-II fig. 3 du distributeur et du commutateur.

La figure 3 est une vue de dessus par rapport à la figure 2.

La figure 4 est une coupe suivant la ligne IV figure 2 du tiroir.

La figure 5 est une coupe suivant la ligne V figure 2.

La figure 6, enfin, est une coupe suivant la ligne VI figure 2.

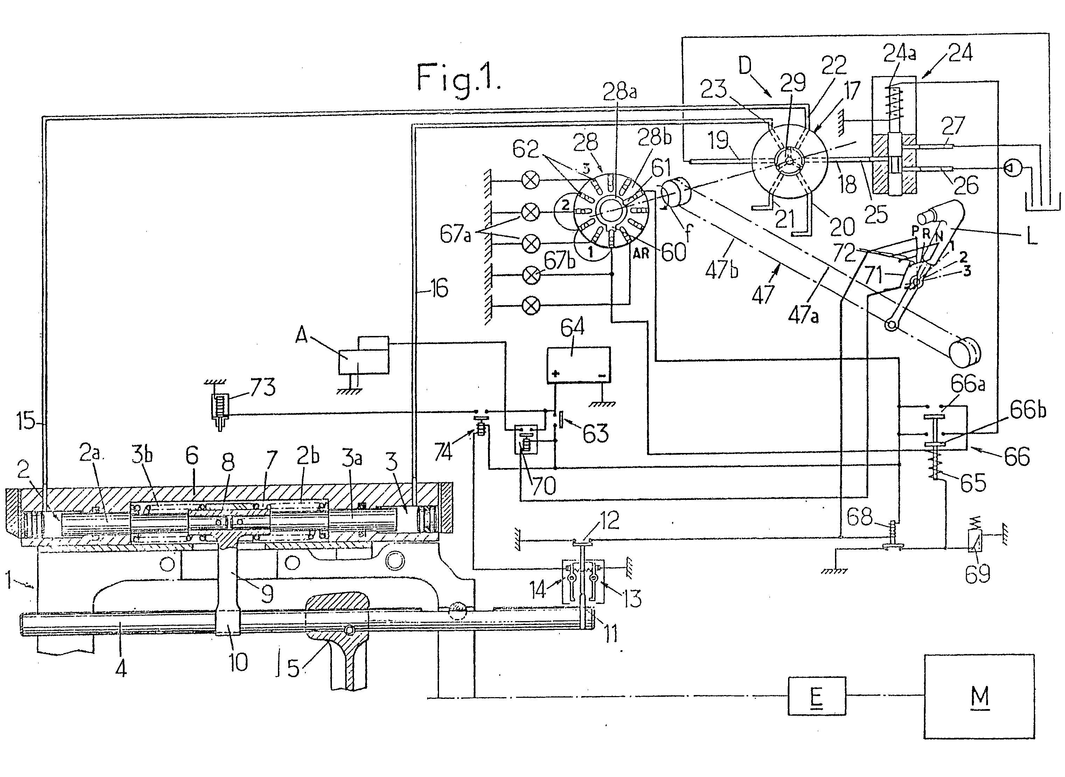

En se reportant aux dessins, notamment à la figure 1, on peut voir un dispositif de commande des changements de rapports d'une boîte de vitesses 1 partiellement représentée.

La commande est réalisée à l'aide de vérins tels que 2, 3, à fluide, généralement à l'huile sous pression. Ces vérins sont du type simple effet et leur piston 2a, 3a, est rappelé, en position neutre, par les ressorts de rappel 2b, 3b.

Chaque vérin tel que 2, 3 est propre à déplacer un coulisseau 4 d'actionnement de fourchette 5 de changement de vitesses.

Dans l'exemple représenté sur la figure 1, les pistons 2a, 3a, sont coaxiaux et sont décalés transversalement par rapport à la direction longitudinale du coulisseau 4. Les cylindres des vérins 2 et 3 sont ménagés aux extrémités opposées d'une pièce 6 fixée contre la boîte de vitesses. Cette pièce 6 comporte un logement central 7 dans lequel sont placés les deux ressorts 2b, 3b, qui rappellent, en position médiane, l'ensemble mobile formé par les pistons 2a, 3a et un manchon 8 lié à ces pistons.

Ce manchon 8 est solidaire d'un bras transversal 9, perpendiculaire à la direction du coulisseau 4 ; l'extrémité 10 de ce bras éloignée du manchon 8 est liée en translation au coulisseau 4. Le déplacement du bras 9, commandé par l'un ou l'autre vérin, provoque le déplacement du coulisseau et de la fourchette 5 liée à ce coulisseau.

Le coulisseau 4 est représenté, sur la figure 1, dans une position de point mort pour laquelle aucune vitesse n'est engagée. Dans cette position de point mort effectif, un doigt 11 solidaire d'une extrémité du coulisseau ferme un contact électrique 12. Deux autres contacts 13, 14, branchés en série, sont montés de manière que l'un de ces contacts soit ouvert par le doigt 11 lorsque le coulisseau 4 a été déplacé, par rapport à sa position point mort (dans un sens ou dans l'autre) de telle sorte qu'un rapport de vitesses soit passé.

Sur la figure 1, on n'a représenté qu'un seul coulisseau 4 et qu'un seul groupe de vérins associés à ce coulisseau. Il est clair que la boîte de vitesses comporte plusieurs coulisseaux et plusieurs groupes de vérins correspondants, les coulisseaux étant généralement disposés parallèlement les uns aux autres. Dans le cas d'une boîte à trois vitesses et une marche arrière, deux coulisseaux 4 et deux paires de vérins pourraient suffire.

A chaque coulisseau 4 est associé un doigt 11 et un contact électrique 12 ; les contacts électriques 12 des différents coulisseaux sont branchés en série.

De même, deux contacts tels que 13 et 14 sont associés à chaque coulisseau 4 et sont branchés en série entre eux ; en outre, tous les contacts tels que 13 et 14 associés aux divers coulisseaux, sont reliés en série.

Une canalisation 15, 16, est branchée, respectivement, sur un orifice débouchant dans la chambre de chaque vérin 2, 3 pour l'admission ou l'évacuation du fluide.

Les vérins sont successivement alimentés en fluide par des moyens de distribution D commandés par un opérateur, notamment le conducteur d'un véhicule automobile.

Un système d'accouplement débrayable E, schématiquement représenté, est disposé entre l'entrée de la boîte de vitesses 1 et un moteur d'entraînement M également représenté d'une manière schématique.

Le système d'accouplement débrayable E peut comporter un dispositif hydrodynamique à glissement de fluide (coupleur ou convertisseur), associé à un embrayage mécanique propre à être débrayé automatiquement lors de chaque changement de rapport de la boîte de vitesses.

Les moyens de distribution D comprennent, d'une part, un distributeur rotatif 17 comportant un orifice d'entrée 18, au moins un orifice de sortie 19 et des orifices de branchement 20, 21, 22, 23, reliés à chaque vérin. Dans l'exemple de réalisation envisagée quatre orifices de branchement sont représentés correspondant à quatre vérins de commande correspondant à trois rapports en marche avant (1ère, 2e et 3e) et un rapport de marche arrière (AR). Il est clair que le nombre de vérins et le nombre correspondant d'orifices de branchement, peut être différent selon les besoins.

Le distributeur 17 est agencé pour mettre en liaison, dans certaines de ses positions angulaires successives, un seul des orifices de branchement 20, 21, 22 et 23, et donc un seul vérin, avec l'orifice d'entrée 18, tandis que tous les autres orifices de branchement et donc tous les autres vérins sont mis en liaison avec l'orifice de sortie 19. Cet orifice de sortie 19 assure le retour de l'huile au bac.

Les moyens de distribution D comprennent, d'autre part, une électrovanne 24 montée sur une canalisation 25 branchée sur l'orifice d'entrée 18 du distributeur 17. L'électrovanne 24 est propre à relier ladite canalisation 25 et donc ledit orifice d'entrée 18, soit à une arrivée de fluide sous pression 26, soit à un échappement formé par une canalisation 27 de retour au bac.

Le dispositif d'assistance comporte, en outre, un commutateur rotatif 28 lié en rotation au distributeur 17 et combiné avec des contacts électriques pour commander l'électrovanne 24 de manière à assurer l'alimentation en fluide sous pression de l'orifice d'entrée (c'est-à-dire en reliant la canalisation 25 à l'arrivée 26) au moins lorsqu'un rapport de la boîte de vitesses est engagé, tandis que ledit orifice d'entrée 18 est branché à l'échappement (c'est-à-dire que la canalisation 25 est alors reliée à la canalisation 27 de retour au bac) aussi longtemps que le débrayage et/ou le dégagement de tous les rapports ne sont pas effectifs.

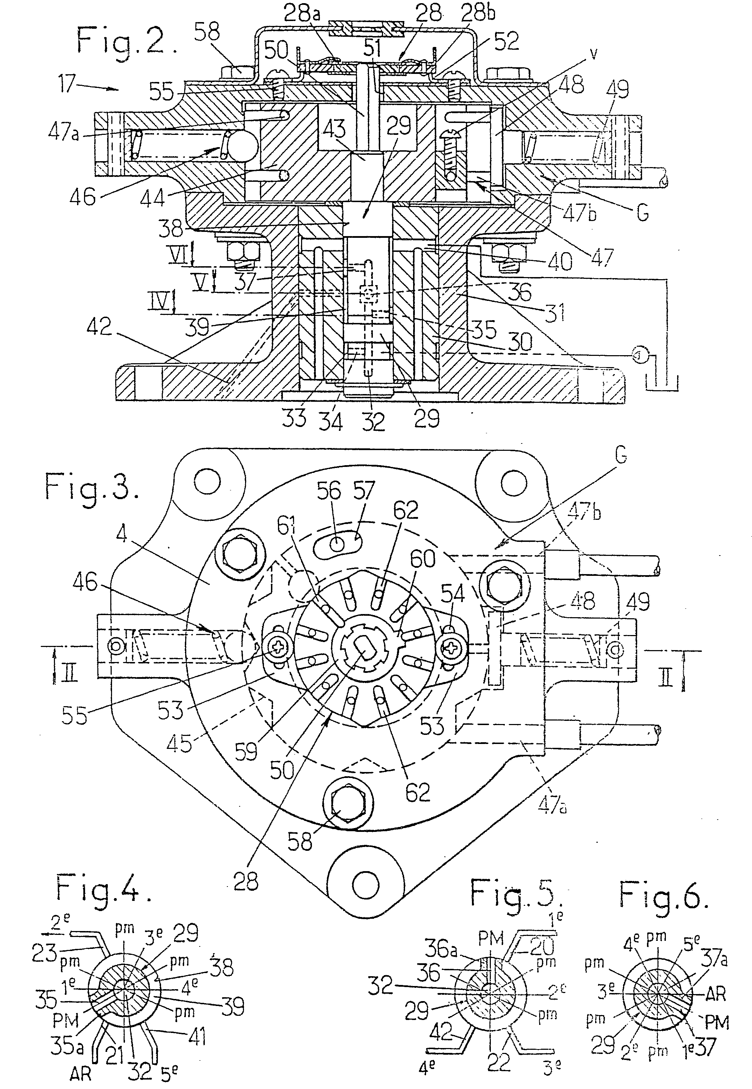

Comme mieux visible sur la figure 2, le distributeur rotatif 17 comporte un tiroir central 29 monté rotatif dans un manchon fixe 30 lui-même disposé dans un boîtier 31 destiné à être fixé sur le carter de la boîte de vitesses, par exemple sur la pièce 6 (fig. 1) fixée à la partie supérieure de ce carter.

Le tiroir 29 comporte un canal longitudinal axial 32 alimenté en fluide à partir d'une gorge périphérique 33 reliée par un canal radial 34 au susdit canal axial.

Le tiroir 29 comporte, en outre, trois canaux 35, 36, 37 (voir notamment figures 4 à 6) orientés radialement, et décalés axialement (voir fig. 2) et angulairement (voir figures 4 à 6). Chacun de ces canaux radiaux 35 à 37 met en liaison le canal axial 32 avec la surface extérieure du tiroir ; toutefois, chaque canal radial 35 à 37 met en liaison le canal axial 32 avec la surface extérieure du tiroir ; toutefois, chaque canal radial 35 à 37 débouche au centre d'un pavé 35a, 36a, 37a qui est au contact de la surface de l'alésage 38 dans lequel peut tourner le tiroir 29.

Les pavés 35a, 36a, 37a, font saillie radialement comme visible sur les figures 4 à 6, par rapport à la surface extérieure du tiroir 29 dont le diamètre, dans la zone des pavés, est inférieur à celui de l'alésage 38 ; une zone annulaire 39, fermée à ses deux extrémités axiales par des épaulements du tiroir 29 est ainsi formée ; cette zone 39 communique avec des canalisations 40 prévues dans le manchon 30 et reliées, en permanence, au bac.

Les trois canaux 35, 36 et 37 sont décalés régulièrement de 120° pour assurer l'équilibrage des forces de pression ; un de ces canaux, à savoir le canal 37 sert uniquement à l'équilibrage, tandis que les deux autres canaux 35 et 36 servent à alimenter successivement les vérins de commande des différents rapports.

Pour cela, les orifices de branchement 20 à 23 situés à la surface inférieure du boîtier 31, sont reliés, par des canalisations prévues dans le boîtier 31 et dans le manchon 30 à des orifices débouchant dans l'alésage 38 de ce manchon ; pour simplifier on a désigné les canalisations reliant lesdits orifices de branchement aux orifices de l'alésage 38 par la même référence numérique que celle de l'orifice de branchement associé.

Les conduits associés aux orifices de branchement 21, 23, débouchent, dans l'alésage 38, à un niveau axial correspondant à un plan perpendiculaire à l'axe du tiroir 29 et passant par l'axe du conduit 35 du tiroir (fig. 4). L'orifice 21 est décalé angulairement de 120° par rapport à l'orifice 23, sur la figure 4 ; l'orifice 21 se trouve situé avant l'orifice 23, selon le sens de rotation des aiguilles d'une montre. On pourrait prévoir un autre orifice de branchement 41 au même niveau axial que l'orifice 21 et 23 ; cet orifice de branchement 41 serait situé avant l'orifice 21, suivant le sens des aiguilles d'une montre, d'un angle de 60° et pourrait être associé à un 5e rapport de vitesse.

Les conduits associés aux orifices de branchement 20, 22, débouchent dans l'alésage 38 au niveau d'un plan perpendiculaire à l'axe du tiroir 29 et décalé axialement, vers le haut selon la figure 2, par rapport au plan associé aux orifices 21 et 23.

Le plan associé aux orifices 20, 22 contient l'axe du canal radial 36.

Le conduit associé à l'orifice 20 débouche dans l'alésage 38 en un point situé à 120° en arrière, dans le sens des aiguilles d'une montre, par rapport à l'orifice 22. L'orifice 20 (ou plus précisément l'orifice par lequel débouche, dans l'alésage 38, le conduit associé à l'orifice 20) est situé à 60° en avant suivant le sens des aiguilles d'une montre, par rapport à l'orifice 23 montré sur la figure 4.

Un orifice de branchement 42 est situé 60° en avant, dans le sens des aiguilles d'une montre, par rapport à l'orifice 22 ; cet orifice 42 peut servir à commander un 4e rapport de la boîte de vitesses.

Aucun orifice n'est prévu dans le plan perpendiculaire à l'axe du tiroir 29 passant par l'axe du conduit 37 d'équilibrage.

On comprend qu'avec une telle disposition, chaque canal radial 35, 36 est propre à venir, pour une position angulaire déterminée du tiroir, en face d'un orifice de branchement de telle sorte qu'un seul des vérins soit relié à l'admission. Par exemple, lorsque le canal 35 (fig. 4) vient en face de l'orifice 23 seul le vérin associé au 2e rapport de la boîte de vitesses sera relié au canal axial 32 ; tous les autres orifices de branchement sont reliés au bac puisqu'ils débouchent dans la zone annulaire 39 qui est isolée du conduit axial et des conduits radiaux 35, 36, 37 par les pavés 35a, 36a, 37a.

Sur ces figures, le tiroir 29 a été représenté dans la position qu'il occupe lorsque la boîte de vitesses est à son point mort effectif.

On voit, qu'à partir de cette position, une rotation de 30° dans le sens des aiguilles d'une montre assure l'alimentation de l'orifice de branchement 20 par le canal radial 36 (fig. 5) et donc le vérin commandant la 1ère ; une rotation de 30° en sens contraire des aiguilles d'une montre, par rapport à la position représentée sur les figures 4 à 6, provoquerait l'alimentation de l'orifice de branchement 21 (fig. 4) par le canal radial 35 ainsi que l'alimentation du vérin commandant la marche arrière. On comprend que les positions angulaires du tiroir 29 assurant l'alimentation en huile sous pression d'un des vérins sont espacés de 60° ; entre chaque position du tiroir 29 assurant une telle alimentation existent des positions moyennes correspondant au point mort PM (fig. 4 à 6) correspondant à la position stable N du levier L et à des points morts désignés par pm, qui ne sont que transitoires lors des changements de rapports ; les positions correspondant à des rapports de vitesses ont été montrées par des traits accompagnés de la désignation du rapport.

Le tiroir 29 comporte un prolongement axial 43 solidaire en rotation d'un barillet-poulie 44. Ce barillet comporte, à sa périphérie, des crans tels que 45 (fig. 3) propres à coopérer avec un billage 46 de manière à assigner au barillet 44 et au tiroir 29 des positions angulaires déterminées correspondant soit au point mort (PM), soit à la mise en communication d'un orifice de branchement avec le canal axial 32. Un câble souple 47 entoure le barillet 44 qui comporte des gorges périphériques pour recevoir ce câble ; le câble 47 comprend un brin inférieur 47b et un brin supérieur 47a ; ce brin inférieur 47b s'enroule dans un premier plan radial jusqu'à son accrochage dans le barillet par un serre-câble à vis v (fig. 2). Le brin supérieur 47a s'enroule en sens inverse, dans un autre plan radial, et s'accroche par un autre serre-câble.

Selon une variante, la commande de la rotation du tiroir 29 pourrait être réalisée par l'intermédiaire d'un mécanisme pas-à-pas rotatif commandé électriquement, soit d'une manière automatique en fonction de paramètres classiques tels que vitesse de rotation du moteur et ouverture du papillon d'admission des gaz, soit selon la position d'un levier de manœuvre actionné par le conducteur.

Un poussoir 48 (fig. 2, 3) est appuyé contre le barillet 44 par un ressort 49 qui, à son autre extrémité, est en butée contre un corps G entourant le barillet. Ce poussoir 48 est diamétralement opposé au billage 46 et est destiné à compenser l'effort radial exercé sur le barillet et sur le tiroir 29 par ce billage.

Le commutateur rotatif 28, comme visible sur la figure 2, est calé en rotation sur l'extrémité du prolongement axial 43 du tiroir 29. Ce prolongement 43 comporte une partie extrême 50 à section sensiblement rectangulaire (fig. 3) (formée par deux faces parallèles et deux faces opposées convexes) ; cette partie 50 fait saillie hors du boîtier à travers une ouverture 51 permettant la rotation de ladite partie 50.

Le commutateur 28 comporte une partie centrale 28a tournante calée en rotation sur la partie 50.

Le commutateur 28 comporte, en outre, une partie annulaire périphérique 28b admettant un plan moyen perpendiculaire à l'axe du tiroir 29 confondu avec le plan moyen de la partie tournante 28 ; la partie annulaire 28b est fixe et est montée sur un support 52 lui-même fixé sur le corps G avec une possibilité de réglage angulaire. Pour cela, le support 52 est muni de deux oreilles 53 (fig. 3) diamétralement opposées, chaque oreille comportant une lumière 54 s'étendant suivant un arc de cercle. Une vis 55 traverse chaque lumière et coopère avec un trou taraudé prévu à la partie supérieure du corps G. Il est donc possible, par serrage, de bloquer la partie annulaire 28b, après réglage, par rapport au corps G.

La position relative du barillet 44 et du boîtier 31 (solidaire du manchon 30) correspond au point mort hydraulique (position relative du tiroir 29 représenté sur les figures 4 à 6) est obtenue en plaçant un trou 56 (fig. 3) traversant le barillet 44, en alignement avec un trou prévu dans le boîtier 31, par introduction d'une tige de diamètre déterminé qui traverse le trou 56 et pénètre dans le trou du boîtier 31. Une fenêtre allongée 57 est prévue dans la partie supérieure du corps G pour le passage de la tige.

Lorsque ce point mort hydraulique a été obtenu, on recherche le point mort mécanique par orientation du corps G de manière que le billage 46 vienne au fond du cran 45 correspondant ; le corps G est alors immobilisé sur le boîtier par serrage de vis 58 de fixation.

On oriente, ensuite, le support 52 et la partie annulaire 28b du commutateur 28 pour obtenir le point mort électrique.

La partie centrale tournante 28a du commutateur comporte, sur son pourtour, une bague conductrice 59 munie d'un ergot 60 faisant saillie radialement vers l'extérieur. Le reste de cette partie tournante 28a est réalisé en matière isolante électriquement, de telle sorte que la bague 59 se trouve isolée de la partie 50.

La partie annulaire 28b est également réalisée en matière isolante électriquement. Cette partie 28b comporte (fig. 3) un premier doigt métallique conducteur 61 orienté radialement et ayant une longueur suffisante pour rester en liaison électrique permanente avec la bague 59, l'extrémité de ce doigt étant en appui sur ladite bague.

La partie annulaire fixe 28b comporte, en outre, une pluralité d'autres doigts métalliques conducteurs 62, orientés radialement, dont la longueur est inférieure à celle du premier doigt 61 ; la longueur de ces doigts 62 est telle qu'une liaison électrique entre la bague 59 et un doigt 62 n'est établie que lorsque l'ergot 60 est orienté dans la direction du susdit doigt 62. Dans l'exemple de réalisation de la figure 3, onze doigts 62 régulièrement répartis sont prévus ; l'espace annulaire entre chaque doigt est donc égal à 30°, de même que l'espace angulaire entre le doigt 61 et les deux doigts 62 entourant ce doigt 61.

Comme visible sur la figure 1, le premier doigt 61 est relié, par l'intermédiaire d'un interrupteur 63 à la borne positive + d'une source de tension électrique continue 64 notamment formée par la batterie d'un véhicule ; la borne de cette source de tension est reliée à la masse.

L'interrupteur 63, sur un véhicule automobile, correspond au contact général fermé par la clé de contact.

Les autres doigts 62, qui sont utilisés, sont reliés alternativement, soit à un enroulement 65 d'un relais de commande 66 de l'électrovanne 24, soit à la masse par l'intermédiaire de témoins lumineux 67a.

Dans l'exemple représenté sur la figure 1, on voit que les deux groupes de deux doigts 62 situés de part et d'autre du doigt 61 ne sont pas utilisés. Toujours en considérant cette figure 1, en partant du doigt 61 et en tournant dans le sens des aiguilles d'une montre, on voit que le troisième doigt 62, à partir du doigt 61, correspond à l'engagement de la marche arrière AR ; lorsque la partie tournante 28a occupe une position angulaire telle que l'ergot 60 se trouve sous ce doigt 62, le témoin correspondant à l'engagement de la marche arrière est allumé.

De la même façon, le cinquième doigt 62, à partir du doigt 61, correspond à la 1re ; le septième doigt correspond à la 2e et le neuvième doigt correspond à la 3e.

Le quatrième doigt (sous lequel se trouve l'ergot 60 dans la position représentée sur la figure 1), le sixième doigt et le huitième doigt correspondent à une position de point mort ; ces trois doigts sont reliés électriquement ensemble et, par l'intermédiaire d'un témoin lumineux 67b à la masse ; ces doigts sont, en outre, reliés, comme déjà expliqué précédemment, à l'enroulement 65.

L'autre extrémité de cet enroulement 65 est reliée à la masse par l'intermédiaire d'un contact repos d'un relais 68 dont l'enroulement est branché entre l'interrupteur 63 et une borne du contact 12 ; l'autre borne de ce contact 12 est reliée à la masse. Ainsi, lorsque l'interrupteur 63 est fermé, le contact repos du relais 68 est ouvert si le coulisseau 4 est dans la position point mort représentée sur la figure 1.

En parallèle avec le contact repos du relais 68, est monté, entre l'enroulement 65 et la masse, un manocontact 69 propre à être coupé lorsque le système d'accouplement E est débrayé. Généralement, le débrayage est commandé par la présence d'une pression hydraulique dans un dispositif de commande tandis que l'embrayage est commandé par l'absence d'une pression ; le manocontact 69 est alors agencé pour couper la liaison électrique lorsque la pression est admise.

Le relais 66 comporte au moins deux contacts travail dont l'un 66a est propre à assurer une auto-alimentation de l'enroulement 65 à partir de l'interrupteur 63 ; l'autre contact travail 66b permet d'établir l'alimentation, à partir de l'interrupteur 63, de l'enroulement de commande 24a de l'électrovanne 24 ; cet enroulement 24a est branché entre le susdit contact et la masse.

Une sécurité est prévue pour n'autoriser le lancement du démarreur A que lorsque le sélecteur L est en position N (point mort) ou en position P (frein de parking) et que les coulisseaux tels que 4 sont dans une position de point mort effectif.

Pour cela, l'alimentation du démarreur A en courant électrique ne peut être obtenue que si un contact travail d'un relais de sécurité 70 est fermé. L'enroulement de ce relais est branché entre la borne +, par l'intermédiaire de l'interrupteur 63, et un doigt de contact 71 fixe ; le sélecteur L porte deux plots 72 propres à établir un contact électrique avec le doigt 71 lorsque le sélecteur L occupe la position N ou la position P.

Les plots 72 sont reliés électriquement à la masse par l'intermédiaire du contact 12.

L'alimentation en liquide sous pression pour assurer le débrayage du système d'accouplement E est commandée par une électrovanne 73 schématiquement représentée dont l'enroulement est branché entre la masse et une borne d'un contact travail d'un relais 74 dont l'enroulement de commande a une borne reliée au pôle + par l'intermédiaire de l'interrupteur 63 et une autre borne reliée à la masse par l'intermédiaire des contacts 14 et 13 branchés en série.

## Fonctionnement

Le fonctionnement du dispositif de commande des changements de rapports d'une boîte de vitesses à rapports étagés, selon l'invention, est le suivant.

On suppose que le moteur M est à l'arrêt et que l'interrupteur 63 est ouvert.

## Démarrage

Le conducteur en vue du démarrage ferme l'interrupteur 63. L'alimentation électrique du démarreur A, pour le lancement du moteur M, n'est possible que si le contact travail du relais 70 est fermé.

Pour obtenir cette fermeture, il faut que le circuit d'alimentation de ce relais soit fermé, c'est-à-dire que :

1. Le sélecteur ou levier de vitesses L se trouve en position N ou P (contact 71, 72 établi) ; et que

2. Le contact 12 de point mort effectif soit fermé.

Si ces deux conditions sont satisfaites, le contact travail du relais 70 est fermé et le démarreur A peut être alimenté, généralement par l'intermédiaire d'un dispositif (non représenté) qui exige le maintien d'une clé de contact dans une position fugitive.

## Position point mort — débrayée

On suppose, maintenant, que le moteur M est lancé.

Pour la position N occupée par le levier L sur la figure 1, la partie tournante 28a et le tiroir 29 occupent les positions angulaires représentées sur cette figure ainsi que sur les figures 4 à 6.

Le témoin 67b de point mort est allumé.

Le tiroir 29 est en position de point mort hydraulique et tous les orifices de branchement 20 à 23 sont reliés à l'orifice de sortie 19 assurant la communication de tous les vérins 2, 3, avec le bac par la zone annulaire 39 (fig. 4 à 6). Les divers coulisseaux tels que 4 sont maintenus dans leur position point mort par les ressorts de rappel 2b, 3b.

Le contact travail du relais 74 est fermé puisque le circuit d'alimentation de son enroulement est également fermé par les contacts 13 et 14 ; l'enroulement de commande de l'électrovanne 73 est sous tension et cette électrovanne est ouverte et assure l'arrivée d'un liquide sous pression pour la commande du débrayage du système d'accouplement E.

Le manocontact 69 est donc ouvert en raison de la pression de débrayage ; le contact repos du relais 68 est également ouvert puisque l'enroulement de ce relais est sous tension, le contact 12 étant fermé.

Il en résulte que l'enroulement 65 du relais de commande 66 n'est pas sous tension et que les deux contacts travail 66a, 66b sont ouverts.

L'électrovanne 24 n'est pas sous tension et occupe la position représentée sur la figure 1 qui assure l'arrivée de liquide sous pression à l'orifice d'entrée 18 du distributeur 17.

## Position 1re vitesse passée — embrayée

On suppose que le conducteur déplace le levier L de manière à commander le passage d'une vitesse, par exemple le passage de la 1re. Le déplacement du levier L coupe le contact entre le doigt 71 et le piot 72 de telle sorte que l'alimentation du relais 70 cesse et le contact travail s'ouvre, interdisant tout actionnement du démarreur quand le rapport est engagé.

Le déplacement du levier L provoque, en outre, la rotation du tiroir 29 de la partie tournante 28a du commutateur dans le sens représenté par la flèche f et tel que l'ergot 60 quitte le doigt 62 correspondant au point mort pour aller se placer sous le doigt 62 voisin correspondant à la 1re vitesse. Simultanément, le tiroir 29 tourne dans le sens des aiguilles d'une montre quand on regarde la figure 5 de telle sorte que le canal 36 vient se placer en face de l'orifice de branchement 20 ; le vérin branché sur cet orifice 20 est alors seul alimenté en liquide sous pression, tous les autres vérins étant reliés au bac.

Le vérin associé au coulisseau de la première vitesse va commander le déplacement de ce coulisseau et entraîner le déplacement de l'axe de fourchette qui quitte la position point mort et engage, la première vitesse. Dès que le coulisseau quitte la position de point mort effectif, le contact tel que 12 s'ouvre coupant l'alimentation du relais 68 et provoquant la fermeture de son contact repos de telle sorte que l'enroulement 65 se trouve relié à la masse ; toutefois, cet enroulement 65 n'est pas mis sous tension du fait que l'ergot 60, en raison de la rotation de la partie tournante 28a, n'est plus en contact avec le doigt 62 relié à l'enroulement 65. Le relais de commande 66 reste donc ouvert et l'alimentation en liquide sous pression de l'orifice 18 est maintenue par l'électrovanne 24 qui reste hors tension.

Les contacts 13 et 14 restent fermés et donc l'électrovanne 73 reste ouverte et le système d'accouplement E reste débrayé, jusqu'à ce que la vitesse soit complètement engagée et, qu'en fin de course, le doigt 11 vienne ouvrir l'un des contacts 13 ou 14.

Lorsque l'ouverture d'un des contacts 13 ou 14 se produit, l'électrovanne 73 coupe l'arrivée de pression au dispositif de commande de débrayage et relie ce dispositif à l'échappement, ce qui commande l'embrayage. La chute de pression a provoqué la fermeture du manocontact 69.

L'ergot 60 se trouve alors sous le doigt 62 affecté à la 1re vitesse et le témoin lumineux 67a correspondant est allumé.

Le vérin de commande de la 1ʳᵉ vitesse est maintenu sous pression puisqu'il est relié à l'orifice d'arrivée 18 et que l'électrovanne 24 hors tension relie cet orifice à l'arrivée de pression 26. Tous les autres vérins sont reliés à l'orifice 19 et au bac.

Changement de vitesses

Le moteur M tournant, on suppose que le levier de vitesses est déplacé, par exemple de la position « 1ʳᵉ vitesse » qu'il occupe à la position « 2ᵉ vitesse ». Ce déplacement du levier L déclenche les opérations suivantes.

a) Mise sous tension de l'électrovanne 24

La partie tournante 28a du commutateur 28 et le tiroir 29 sont entraînés en rotation et passent dans une position point mort intermédiaire ; cette position point mort intermédiaire est décalée de 30° par rapport à la position « 1ʳᵉ vitesse » ; l'ergot 60 quitte le doigt 62 correspondant à la première vitesse et vient au-dessous du doigt 62, correspondant au point mort, situé entre les doigts associés à la 1ʳᵉ et à la 2ᵉ vitesses. Le tiroir 29 prend également une position de point mort hydraulique pour laquelle tous les orifices de branchement 20 à 23 communiquent avec la zone annulaire 39 reliant tous les vérins 2, 3 à l'échappement.

Du fait que l'ergot 60 est venu au contact d'un doigt 62 correspondant au point mort, la borne de l'enroulement 65 reliée à ces doigts 62 de point mort se trouve ainsi reliée au doigt 61 et à la borne + de la batterie 64.

Le contact repos du relais 68 est fermé (car le contact 12 est ouvert) ; le manocontact 69 est également fermé puisque le dispositif E est embrayé.

Le retour à la masse de l'enroulement 65 est donc assuré par ces deux contacts ; le relais 66 est excité et les contacts travail 66a, 66b se ferment. Le contact 66a assure l'auto-alimentation directe de l'enroulement 65 à partir de l'interrupteur 63. Cette auto-alimentation permet de maintenir excité le relais 66 lorsque l'ergot 60 quitte le doigt 62 puisque la partie tournante 28a poursuit sa rotation jusqu'à ce que cet ergot 60 vienne au-dessous du doigt 62 correspondant à la 2ᵉ vitesse (position correspondant à celle du levier L en position 2ᵉ vitesse). La fermeture du contact travail 66b assure la mise sous tension électrique de l'électrovanne 24 ; le tiroir de cette électrovanne quitte la position représentée sur la figure 1 et passe dans la position qui met en communication la conduite 25 (et donc l'orifice 18) avec la canalisation 27 de retour au bac.

Il est à noter que dès que le tiroir 29 a quitté la position correspondant à la 1ʳᵉ vitesse pour passer en position de point mort hydraulique, du fait que tous les vérins sont reliés à l'échappement, le ressort de rappel associé au piston du vérin de 1ʳᵉ vitesse rappelle ce piston en position de point mort effectif. Toutefois, le déplacement du piston peut s'effectuer moins rapidement que la rotation du tiroir 29 et de la partie tournante 28a commandée par le levier L. Il est donc possible que le tiroir 29 arrive dans la position correspondant à la 2ᵉ vitesse avant que le piston du vérin de la vitesse engagée précédemment, à savoir la 1ʳᵉ, ne soit complètement revenu en position point mort ; du fait que l'électrovanne 24 assure la mise à l'échappement de l'orifice d'entrée 18 du distributeur 17, tous les vérins restent reliés à l'échappement même lorsque le tiroir 29 occupe la position 2ᵉ vitesse, aussi longtemps que les coulisseaux 4 n'ont pas atteint leur point mort effectif.

Dès que le piston du vérin associé à la 1ʳᵉ vitesse amorce son retour vers la position point mort, le contact 13 ou 14 correspondant se ferme à nouveau ; le relais 74 est excité et l'électrovanne 73 assure l'admission de fluide sous pression pour le débrayage du système d'accouplement E ; le manocontact 69 s'ouvre et l'enroulement 65 ne reste plus relié à la masse que par le contact repos du relais 68.

b) Point mort effectif

Lorsque la 1ʳᵉ vitesse a été complètement dégagée et que le coulisseau 4 correspondant atteint sa position de point mort effectif, le doigt 11 ferme le contact 12 ; le relais 68 est excité et le contact repos correspondant s'ouvre.

Le retour à la masse de l'enroulement 65 est alors coupé de telle sorte que le relais 66 n'est plus excité et les contacts 66a et 66b s'ouvrent.

L'électrovanne 24 n'est plus alimentée et son tiroir reprend la position de la figure 1 de telle sorte que l'orifice 18 est de nouveau relié à l'arrivée de pression 26.

A ce moment, en effet, la 1ʳᵉ vitesse est complètement dégagée et il est possible de commander le déplacement de la fourchette correspondant à la 2ᵉ vitesse pour l'engagement de cette dernière.

Le fluide sous pression arrivant par l'orifice d'entrée 18 se dirige vers le canal 35 qui se trouve alors en face de l'orifice de branchement 23 (fig. 4). Le vérin associé à la 2ᵉ vitesse est alimenté en liquide sous pression et le passage de la 2ᵉ vitesse est commandé.

c) Enclenchement de la 2ᵉ vitesse

Le coulisseau 4 associé à la deuxième vitesse en quittant la position de point mort effectif, sous l'action du vérin d'entraînement, écarte le doigt 11 du contact 12 qui s'ouvre ; le contact repos du relais 68 se ferme à nouveau puisque ce relais n'est plus excité. Toutefois, le doigt 62 auquel est relié l'enroulement 65 n'est plus en liaison électrique avec le doigt 61 du fait que l'ergot 60 se trouve sous le doigt 62 associé à la deuxième vitesse. Le relais 66 n'est donc pas excité et l'électrovanne 24 reste dans la position assurant l'arrivée de liquide sous pression.

En fin de course du coulisseau 4, lorsque la 2e vitesse va être complètement engagée, l'un des contacts tels que 13 ou 14 s'ouvre ; le relais 74 n'est plus excité, l'électrovanne 73 n'est plus sous tension, ce qui commande le réembrayage. Le manocontact 69 se ferme par suite de cette chute de pression.

La deuxième vitesse est passée et l'embrayage est terminé.

On comprend que les explications qui précèdent peuvent s'appliquer au passage de n'importe quel rapport de vitesse.

Le dispositif de l'invention est d'un encombrement réduit et facilement adaptable sur une boîte de vitesses. Le distributeur étant porté directement par une paroi ou un couvercle du carter de la boîte de vitesses, tous les conduits hydrauliques entre distributeur et vérins peuvent être uniquement formés par des trous percés dans le boîtier ou corps de distributeur et dans le carter de boîte de vitesses.

Le prix de revient du dispositif est réduit du fait qu'une seule électrovanne sert à la commande de tous les vérins.

Dans le cas d'une transmission comportant un dispositif hydrodynamique (coupleur ou convertisseur) où le glissement de fluide, surtout à froid, s'oppose à un débrayage total entre l'arbre menant et la boîte de vitesses, le dispositif de commande de l'invention permet d'assurer facilement les changements de rapport qui nécessitent des efforts de manœuvre parfois élevés.

Il existe, en outre, une interchangeabilité simple entre un système de commande manuelle et un système à commande automatique.

Le dispositif de l'invention convient, particulièrement, à une transmission pour véhicule automobile.

**Revendications**

1. Dispositif de commande à fluide sous pression, notamment hydraulique, des changements de rapport d'une boîte de vitesses à rapports étagés, à l'aide de vérins à fluide (2, 3), chaque vérin étant propre à déplacer un coulisseau (4) d'actionnement de fourchette (5) de changement de vitesses, les vérins étant successivement alimentés en fluide par des moyens de distribution (D) commandés par un opérateur, notamment le conducteur d'un véhicule automobile, un système d'accouplement débrayable (E) étant disposé entre l'entrée de la boîte de vitesses et un moteur d'entraînement, les moyens de distribution (D) comprenant un distributeur rotatif (17) comportant un orifice d'entrée (18), des moyens de mise à l'échappement et des orifices de branchement (20, 21, 22, 23) reliés à chaque vérin, ce distributeur étant agencé pour mettre en liaison, dans ses différentes positions angulaires successives, un seul orifice de branchement et donc un seul vérin avec l'orifice d'entrée (18), tandis que tous les autres orifices de branchement et vérins sont mis en liaison avec l'échappement, ce dispositif de commande comportant un commutateur rotatif (28) lié en rotation au distributeur et étant caractérisé par le fait que le distributeur rotatif (17) comporte au moins un orifice de sortie (19) et est agencé pour mettre en liaison, avec cet orifice de sortie (19), tous les vérins autres que celui relié à l'orifice d'entrée (18), que les moyens de distribution (D) comprennent une électrovanne (24) montée sur une canalisation (25) branchée sur l'orifice d'entrée (18) du distributeur, cette électrovanne étant propre à relier, selon son état, ledit orifice d'entrée (18) ou à une arrivée de fluide sous pression (26), ou à un échappement (27), et que le commutateur rotatif (28) est combiné avec des contacts électriques pour commander l'électrovanne (24) de manière à assurer l'alimentation en fluide sous pression de l'orifice d'entrée au moins lorsque le rapport est engagé, tandis que ledit orifice d'entrée (18) est branché à l'échappement tant que le débrayage et/ou le dégagement de tous les rapports ne sont pas effectifs.

2. Dispositif selon la revendication 1, caractérisé par le fait que le distributeur rotatif (17) comporte un tiroir central (29) monté rotatif dans un manchon (30), ce tiroir comportant un canal longitudinal (32) alimenté en fluide sous pression, notamment à partir d'une gorge périphérique (33), et au moins deux canaux (35, 36, 37) orientés radialement et décalés axialement et angulairement, ces canaux étant propres à mettre en liaison le canal longitudinal (32) avec la surface du tiroir, chaque canal radial étant propre à venir, pour une position angulaire déterminée du tiroir, en face d'un orifice prévu dans le manchon (30) et relié à un orifice de branchement (20 à 23) et donc à un des vérins, la zone (39) entourant le tiroir étant reliée à l'échappement.

3. Dispositif selon la revendication 2, caractérisé par le fait que le tiroir central (29) comporte trois canaux (35, 36, 37) orientés radialement, débouchant dans des pavés (35a, 36a, 37a) situés à la surface du tiroir, ces canaux étant décalés angulairement de 120° pour assurer l'équilibrage des forces de pression, un des canaux (37) servant seulement à l'équilibrage, tandis que les deux autres canaux (35, 36) servent à alimenter successivement les vérins de commande de rapports différents.

4. Dispositif selon l'une quelconque des revendications 2 ou 3, caractérisé par le fait que le tiroir central (29) comporte un prolongement axial (43) sur lequel est calée en rotation une partie centrale (28a) tournante du commutateur rotatif (28), ce dernier comportant une partie annulaire périphérique (28b) entourant la partie centrale et montée fixe sur un boîtier.

5. Dispositif selon l'une quelconque des revendications précédentes dans lequel le commutateur rotatif (28) comporte une partie centrale (28a) tournante et une partie annulaire périphérique (28b) entourant la partie centrale et montée fixe, caractérisé par le fait que la partie centrale (28a) tournante du commutateur comporte, sur son pourtour, une bague conductrice (59) munie d'un ergot (60) faisant saillie radialement, tandis que la partie annulaire périphérique (28*b*) comporte un premier doigt (61), orienté radialement, et ayant une longueur suffisante pour rester en liaison électrique permanente avec ladite bague, et une pluralité d'autres doigts (62), orientés radialement et espacés angulairement dont la longueur est inférieure à celle du premier doigt (61) de telle sorte qu'un de ces autres doigts (62) ne peut être en liaison électrique avec la bague (59) que lorsque le susait ergot (60) est orienté dans la direction du susdit doigt, le premier doigt (61), de plus grande longueur, étant notamment relié à la borne positive d'une source de tension (64) tandis que un sur deux des autres doigts (62) (tout au moins pour une partie de ces autres doigts) est branché de manière à commander le passage de l'électrovanne dans l'état qui assure le branchement de l'orifice d'entrée du distributeur à l'échappement.

6. Dispositif selon l'une des revendications 4 ou 5, caractérisé par le fait que le prolongement (43) du tiroir est solidaire en rotation d'un barillet-poulie (44), notamment disposé entre le tiroir proprement dit et le commutateur et des moyens d'entraînement du barillet-poulie sont prévus, ces moyens comprenant, notamment, un câble (47) s'enroulant autour du barillet, un brin du susdit câble étant relié à une extrémité d'un levier (L) de sélection de vitesses commandant les mouvements de ce câble.

7. Dispositif selon l'une quelconque des revendications précédentes, caractérisé par le fait que l'électrovanne (24) est agencée de manière à assurer l'alimentation en fluide sous pression de l'orifice d'entrée (18) du distributeur lorsqu'elle n'est pas soumise à une tension électrique et à assurer le branchement dudit orifice d'entrée sur l'échappement (27) lorsqu'elle est soumise à la tension électrique, le circuit d'alimentation électrique de l'électrovanne étant commandé par un contact d'un relais (66) dont l'enroulement (65) est monté dans un circuit propre à être fermé par le contact établi entre l'ergot (60) du commutateur rotatif et au moins un des doigts (62) de plus faible longueur reliés audit enroulement, ce circuit comprenant, en série avec l'enroulement (65) de commande du relais, deux contacts (68, 69) branchés en parallèle, notamment entre une extrémité dudit enroulement et la masse, l'un de ces contacts (68) étant propre à être coupé lorsqu'un coulisseau de la boîte de vitesses occupe la position du point mort effectif, tandis que l'autre contact (69) est propre à être coupé lorsque le système d'accouplement débrayable est effectivement débrayé.

8. Dispositif selon la revendication 7 dans lequel le système d'accouplement débrayable (E) est commandé par une pression de fluide notamment hydraulique, caractérisé par le fait que le contact (69) associé au système d'accouplement est constitué par un manocontact.

9. Dispositif selon la revendication 7, caractérisé par le fait que le relais (66) de commande de l'électrovanne comporte un contact travail (66*a*) branché de manière à assurer une auto-alimentation électrique de l'enroulement (65) de commande de ce repais, notamment pour maintenir fermé le susdit relais lorsque le contact entre le susdit ergot (60) et un des doigts (62) du commutateur (26), reliée audit enroulement, est interrompu lors de la rotation de la partie centrale (28*a*) de ce commutateur pour un changement de vitesses.

## Claims

1. A pressure fluid, *inter alia* a hydraulic fluid, device for controlling ratio changes of a stepped-ratio gearbox by means of hydraulic rams (2, 3) each adapted to move a slider (4) actuating a ratio-changing fork (5), the rams being supplied with fluid *seriatim* by distribution means (D) controlled by an operator, *inter alia* the driver of a motor vehicle, a clutch system (E) being disposed between the gearbox input and a driving engine, the distribution means (D) comprising a rotary distributor (17) comprising an inlet port (18), exhausting means and connecting ports (20-23) connected to each ram, the distributor being adapted to connect in its consecutive angular positions a single connecting port and, therefore, a single ram to the inlet port (18), all the other connecting and ram ports being connected to the exhaust, the control device comprising a rotary selector (28) corotating with the distributor, characterised in that the rotary distributor (17) has at least one outlet port (19) and is adapted to connect thereto every ram except the ram connected to the inlet port (18) ; the distribution means (D) comprise an electrically controlled valve (24) disposed in a line (25) connected to the distributor inlet port (18), the electrically controlled valve being adapted to connect the inlet port (18), according to the state of the electrically controlled valve, either to a hydraulic inlet (26) or to an exhaust (27) ; and the rotary selector (28) is combined with electrical contacts to so control the electrically controlled valve (24) as to supply the inlet port with hydraulic fluid at least when the ratio is engaged, whereas the inlet port (18) is connected to the exhaust as long as the declutching and/or the disengagement of all the ratios is/are not operative.

2. A device according to claim 1, characterised in that the rotary distributor (17) comprises a central spool (29) rotatable in a sleeve (30), the spool (29) having a longitudinal duct (32) supplied with pressure fluid, *inter alia* from a peripheral groove (33), and at least two radially extending ducts (35-37) offset axially and angularly from one another, the ducts (35-37) being adapted to connect the longitudinal duct (32) to the spool surface, each radial duct being adapted to move, in a predetermined angular position of the spool, opposite an orifice in the sleeve (30), the latter orifice being connected to a connecting port (20-23) and, therefore, to one of the rams, the zone (39) which extends around the spool being connected to the exhaust.

3. A device according to claim 1, characterised in that the central spool (29) has three radially extending ducts (35-37) extending to blocks (35a, 36a, 37a) disposed on the spool surface, the latter ducts being angularly offset from one another by 120° in order to balance the pressures, one of the ducts (37) serving solely for balancing whereas the other two ducts (35, 36) serve for supplying *seriatim* the rams controlling different ratios.

4. A device according to claim 2 and/or 3, characterised in that the central spool (29) has an axial extension (43) to which is secured, for corotation therewith, a central rotating part (28a) of the rotary selector (28), the latter comprising a peripheral annular part (28b) which extends around the central part and is rigidly secured to a casing.

5. A device according to any of the previous claims wherein the rotary selector (28) has a rotating central part (28a) and a peripheral annular part (28b) extending therearound and fixedly disposed, characterised in that the central part (28a) has on its periphery a conductive ring (59) having a radially projecting stud or protuberance or the like (60), while the peripheral annular part (28b) has a first radially extending finger long enough to remain permanently connected electrically to the ring and a number of other radially extending and angularly spaced-apart fingers (62) shorter than the first finger (61) so that any finger (62) can be in electrical connection with the ring (59) only when the projection (60) is oriented in the same direction as such finger, the first and longer finger (61) being connected *inter alia* to the positive pole of a power supply (64), whereas one out of two of the other fingers (62) (or at least some of such other fingers) is or are so connected as to cause the electrically controlled valve to change over into the state in which the distributor inlet port is connected to the exhaust.

6. A device according to claim 4 and/or 5, characterised in that the extension (43) of the spool corotates with a pulley drum (44) disposed *inter alia* between the spool and the selector, and means for driving the pulley drum are provided in the form *inter alia* of a cable (47) which is wound around the drum, one run of the cable being connected to one end of a ratio selection lever (L) controlling the movement of the cable.

7. A device according to any of the previous claims, characterised in that the electrically controlled valve (24) is adapted when in its normal (de-energized) state to supply hydraulic fluid to the distributor inlet port (18) and when energized to connect the inlet port to the exhaust (27), valve energization being controlled by a contact of a relay (66) whose winding (65) is arranged in a circuit adapted to be closed when the projection or the like (60) of the rotary selector makes contact with at least one of the shorter fingers (62) connected to the winding, the circuit comprising in series with the relay control winding (65) two parallel-connected contacts (68, 69), the latter contacts being connected *inter alia* between one end of the winding and earth, one of the contacts (68) being adapted to be interrupted when a slider of the gearbox is in the actual neutral position whereas the other contact (69) is adapted to be interrupted when the clutch system is actually in the declutched state.

8. A device according to claim 7 wherein the clutch system (E) is controlled by a pressure fluid, *inter alia* a hydraulic fluid, characterised in that the contact (69) associated with the clutch system takes the form of a manocontact.

9. A device according to claim 7, characterised in that the valve control relay (66) has a normally open contact (66a) so connected as to ensure self-holding of the winding (65) of the control relay, *inter alia* to keep the same closed when contact between the projection (60) and any of the selector fingers (62) connected to the winding is interrupted as the central part (28a) of the selector rotates for gear-changing.

## Ansprüche

1. Druckmittel-, insbesondere hydraulisch betätigte Steuerung eines Gangschalt-Stufengetriebes, umfassend Druckmittelzylinder (2, 3), die jeweils zum Verstellen eines Betätigungsschiebers (4) für eine Schaltgabel (5) zum Schalten der Gänge bestimmt sind und nacheinander mit Druckmittel durch eine Verteileranordnung (D) beaufschlagbar sind, die durch eine Bedienungsperson, insbesondere den Fahrer eines Kraftfahrzeuges steuerbar ist, und eine zwischen dem Eingang des Getriebes und einem Antriebsmotor angeordnete ausrückbare Kupplungsanordnung (E), wobei die Verteileranordnung (D) einen umlaufenden Verteiler (17) aufweist mit einer Einlaßöffnung (18), Auslaßmitteln und mit jedem Druckmittelzylinder verbundene Verbindungsöffnungen (20, 21, 22, 23), wobei ferner dieser Verteiler so ausgebildet ist, daß er in seinen verschiedenen aufeinanderfolgenden Winkelstellungen eine einzige Verbindungsöffnung und somit einen einzigen Druckmittelzylinder mit der Einlaßöffnung (18) verbindet, während alle anderen Verbindungsöffnungen und Druckmittelzylinder mit dem Auslaß verbunden sind, und wobei schließlich die Steuervorrichtung einen drehfest mit dem Verteiler verbundenen Drehschalter (28) aufweist, dadurch gekennzeichnet, daß der Verteiler (17) mindestens eine Auslaßöffnung (19) aufweist und so ausgebildet ist, daß er mit dieser Auslaßöffnung (19) alle Druckmittelzylinder mit Ausnahme des mit der Einlaßöffnung (18) verbundenen Druckmittelzylinders verbindet, daß die Verteileranordnung (D) eine Magnetventil (24) aufweist, das in einer mit der Einlaßöffnung (18) des Verteilers verbundenen Leitung (25) liegt und je nach seiner Stellung die Einlaßöffnung (18) an eine Zuflußleitung (26) oder eine Abflußleitung (27) für das Druckmittel anschließt, und daß der Drehschalter (28) mit elektrischen Kontaktelementen gekoppelt ist, um das Magnetventil (24) so zu schalten, daß ein Druckmittelzufluß zur Einlaßöffnung mindestens dann erfolgt, wenn der Gang eingelegt ist, während die Einlaßöffnung (18) mit dem Auslaß verbunden ist, solange die Kupplung nicht ausgerückt ist und/oder kein Gang eingelegt ist.

2. Steuervorrichtung nach Anspruch 1, dadurch gekennzeichnet, daß der umlaufende Verteiler (17) einen zentralen Schieber (29) aufweist, der drehbar in einer Hülse (30) gelagert ist und einen Längskanal (32), der mit Druckmittel, insbesondere von einer Umfangsnut (33) her beaufschlagbar ist, sowie mindestens zwei radial gerichtete und in Achsrichtung sowie in Umfangsrichtung gegeneinander versetzte Kanäle (35, 36, 37) aufweist, die zur Verbindung des Längskanales (32) mit der Oberfläche des Schiebers dienen und bei einer vorgegebenen Winkelstellung des Schiebers in Gegenüberstellung zu einer in der Hülse (30) vorgesehenen Öffnung treten, die mit einer der Verbindungsöffnungen (20 bis 23) und somit einem der Druckmittelzylinder verbunden ist, wobei der den Schieber umgebende Bereich (39) mit dem Auslaß verbunden ist.

3. Steuervorrichtung nach Anspruch 2, dadurch gekennzeichnet, daß der zentrale Schieber (29) drei radial gerichtete Kanäle (35, 36, 37) aufweist, die in an der Umfangsfläche des Schiebers angeordneten Ansätzen (35a, 36a, 37a) münden, wobei diese Kanäle jeweils um einen Winkel von 120° gegeneinander versetzt sind, um eine Gleichverteilung der Druckkräfte zu gewährleisten, und wobei einer der Kanäle (37) nur zum Kräfteausgleich dient, während die beiden anderen Kanäle (35, 36) zur sukzessiven Speisung der Steuerzylinder für die verschiedenen Gänge dienen.

4. Steuervorrichtung nach Anspruch 2 oder 3, dadurch gekennzeichnet, daß der zentrale Schieber (29) einen axialen Fortsatz (43) aufweist, auf dem drehfest ein umlaufender Mittelabschnitt (28a) des Drehschalters (28) sitzt, wobei letzterer einen ringförmigen. Umfangsabschnitt (28b) aufweist, der den Mittelabschnitt umgibt und fest an einem Gehäuse angeordnet ist.

5. Steuervorrichtung nach einem der vorhergehenden Ansprüche, wobei der Drehschalter (28) einen umlaufenden Mittelabschnitt (28a) und einen ringförmigen Umfangsabschnitt (28b) aufweist, der den Mittelabschnitt umgibt und feststeht, dadurch gekennzeichnet, daß der umlaufende Mittelabschnitt (28a) des Drehschalters an seinem Umfang einen leitfähigen Ring (59) mit einer radial vorspringenden Nase (60) trägt, während der ringförmige Umfangsabschnitt (28b) einen ersten radial gerichteten Finger (61) mit einer Länge, die ausreicht, um den ersten Finger in ständiger elektrischer Verbindung mit dem Ring zu halten, und eine Vielzahl weiterer radial gerichteter und in einem Winkelabstand voneinander angeordneter Finger (62) trägt, deren Länge geringer als die des ersten Fingers (61) ist, so daß die weiteren Finger (62) nur dann in eine elektrische Verbindung mit dem Ring (59) treten, wenn die genannte Nase (60) in die Richtung des genannten Fingers weist, wobei der längere erste Finger (61) insbesondere an den positiven Pol einer Spannungsquelle (64) angeschlossen ist, wogegen einer von zwei der übrigen Finger (62) (wenigstens für einen Teil der anderen Finger) so geschaltet ist, daß er den Übergang des Magnetventiles in eine Stellung steuert, welche die Verbindung der Einlaßöffnung des Verteilers mit dem Auslaß gewährleistet.

6. Steuervorrichtung nach Anspruch 4 oder 5, dadurch gekennzeichnet, daß der Fortsatz (43) des Schiebers drehfest mit einer trommelförmigen Riemenrolle (44) verbunden ist, die insbesondere zwischen dem eigentlichen Schieber und dem Drehschalter angeordnet ist, und daß Antriebsmittel für die Riemenrolle vorgesehen sind, die insbesondere ein die Trommel umschlingendes Seil (47) umfassen, dessen eines Trum mit einem Ende eines Geschwindigkeitswahlhebels (L) verbunden ist, der die Bewegungen dieses Seiles steuert.

7. Steuervorrichtung nach einem der vorhergehenden Ansprüche, dadurch gekennzeichnet, daß das Magnetventil (24) so ausgebildet ist, daß es die Druckmittelzufuhr zur Einlaßöffnung (18) des Verteilers gewährleistet, wenn es nicht unter Spannung steht, und die Verbindung der Einlaßöffnung mit dem Auslaß (27) bewirkt, wenn es unter Spannung steht, wobei die Versorgungsschaltung des Magnetventils durch einen Kontakt eines Relais (66) gesteuert wird, dessen Wicklung (65) in einem Kreis liegt, der durch einen zwischen der Nase (60) des Drehschalters und mindestens einem der mit der genannten Wicklung verbundenen Finger (62) geringerer Länge hergestellten elektrischen Kontakt schließbar ist und der in Reihe mit der Steuerwicklung (65) des Relais zwei parallel geschaltete Kontakte (68, 69) aufweist, die insbesondere zwischen einem Ende der genannten Wicklung und Masse liegen, wobei einer dieser Kontakte (68) unterbrechbar ist, wenn ein Schieber der Getriebes die Stellung des effektiven Totpunktes einnimmt, während der andere Kontakt (69) unterbrechbar ist, wenn die ausrückbare Kupplungsanordnung tatsächlich ausgerückt ist.

8. Steuervorrichtung nach Anspruch 7, wobei die ausrückbare Kupplungsanordnung (E) durch ein Druckmittel, insbesondere hydraulisch betätigbar ist, dadurch gekennzeichnet, daß der der Kupplungsanordnung zugeordnete Kontakt (69) von einem Druckschalter gebildet ist.

9. Steuervorrichtung nach Anspruch 7, dadurch gekennzeichnet, daß das Relais (66) zur Steuerung des Magnetventils einen Arbeitskontakt (66a) aufweist, der so geschaltet ist, daß er eine elektrische Selbstversorgung der Steuerwicklung (65) dieses Relais gewährleistet, um insbesondere dieses Relais geschlossen zu halten, wenn der Kontakt zwischen der genannten Nase (60) und den Fingern (62) des mit der genannten Wicklung verbundenen Schalters (26) während der Drehung des Mittelabschnitts (28a) des Schalters zum Ändern der Gänge unterbrochen ist.

Fig.1.

0 019 534